# EUROPEAN PATENT APPLICATION

(11) **EP 4 481 847 A1**
(43) Date of publication of application: **25.12.2024**
(21) Application number: 22952387.3
(22) Date of filing: 28.07.2022
(51) Int. Cl.: H01M 4/134, H01M 4/133, H01M 10/0525

(54) **SECONDARY BATTERY AND PREPARATION METHOD THEREFOR, AND ELECTRIC DEVICE**

(71) Applicant: Contemporary Amperex Technology Co., Limited, Ningde, Fujian 352100 (CN)
(72) Inventor: LIU, Liangbin, Ningde, Fujian 352100 (CN); WANG, Jiazheng, Ningde, Fujian 352100 (CN); YAN, Qingwei, Ningde, Fujian 352100 (CN); DONG, Xiaobin, Ningde, Fujian 352100 (CN); LI, Yuan, Ningde, Fujian 352100 (CN); LV, Zijian, Ningde, Fujian 352100 (CN)
(74) Representative: Kraus & Lederer PartGmbB
(86) International application number: PCT/CN2022/108554
(87) International publication number: WO 2024/020927

(57) **Abstract**

The present disclosure provides a secondary battery including a negative electrode plate, and the negative electrode plate includes: a negative electrode current collector, a first negative electrode active material layer, and a second negative electrode active material layer. The first negative electrode active material layer is arranged on at least one surface of the negative electrode current collector, and the first negative electrode active material layer includes a silicon-based material and a porous material; and the second negative electrode active material layer is arranged on a surface of the first negative electrode active material layer away from the negative electrode current collector.

## Description

### TECHNICAL FIELD

The present disclosure relates to the field of secondary batteries, and more particularly, to a secondary battery and a preparation method therefor, and an electric device.

### BACKGROUND

Secondary batteries such as lithium-ion batteries and so on have been widely applied due to their advantages of high energy density, good cycle performance and the like. With the development of the fields of electric vehicles, spaceflight, energy storage and the like, higher requirements are raised for capacity and cycle performance of the secondary batteries in the market. However, it is generally difficult for secondary batteries in the conventional technology to ensure relatively good cycle performance and relatively low resistance under a condition of a relatively high capacity.

### SUMMARY

Based on the above problems, the present disclosure provides a secondary battery and a preparation method therefor. The secondary battery can have a relatively high capacity as well as a relatively good cycle performance and relatively low resistance.

The present disclosure further provides an electric device containing the secondary battery.

A first aspect of the present disclosure provides a secondary battery, including a negative electrode plate. The negative electrode plate includes: a negative electrode current collector; a first negative electrode active material layer, which is disposed on at least one surface of the negative electrode current collector, the first negative electrode active material layer including a silicon-based material and a porous material; and a second negative electrode active material layer, which is disposed on a surface of the first negative electrode active material layer away from the negative electrode current collector.

In the secondary battery of the present disclosure, the negative electrode plate includes the negative electrode current collector, the first negative electrode active material layer and the second negative electrode active material layer. The first negative electrode active material layer close to the negative electrode current collector includes the silicon-based material and the porous material. In a charging-discharging process, the silicon-containing negative electrode plate has a relatively low cycle expansion rate, and the secondary battery has a relatively high capacity, a relatively good cycle performance and a relatively low resistance concurrently.

In an embodiment, the porous material includes at least one of porous carbon, porous metal, and porous ceramic;
optionally, the porous carbon includes at least one of porous graphite, porous resin carbon, porous biomass carbon, activated carbon, porous carbon fibers and expanded graphite;
optionally, the porous metal includes at least one of porous nickel, porous copper, porous titanium, porous gold, porous stainless steel and porous metal alloy material;
optionally, the porous ceramic includes at least one of porous Si₃N₄, porous Al₂O₃ and porous SiC.

Applying the porous material above to the negative electrode plate can improve the resistance and the cycle performance of the secondary battery and will not result in deterioration of an electrochemical performance of the negative electrode plate.

In an embodiment, a pore diameter of the porous material is 10nm-1000nm; optionally, the pore diameter of the porous material is 30nm-300nm. The pore diameter of the porous material being within the range above is favorable for lithium-ion transmission and a cycle expansion rate of the negative electrode plate, and further improves the resistance and the cycle performance of the secondary battery.

In an embodiment, a porosity P of the porous material satisfies P≥30%; optionally, the porosity P of the porous material satisfies 40%≤P≤80%. The porosity of the porous material being within the range above can improve the lithium-ion transmission performance and the cycle expansion rate of the negative electrode plate, and the secondary battery has a relatively low resistance and a relatively good cycle performance.

In an embodiment, in the first negative electrode active material layer, a mass percentage of the porous material is less than or equal to 10%, and optionally 2%-8%. By controlling content of the porous material in the first negative electrode active material layer within the above range, the secondary battery has a relatively low resistance and a relatively good cycle performance while having relatively high capacity and energy density.

In an embodiment, in the first negative electrode active material layer, a mass percentage of the silicon-based material is greater than or equal to 30%, and optionally 40%-60%. The silicon-based material has a relatively high theoretical capacity; with content of the silicon-based material in the first negative electrode active material layer being within the range above, the secondary battery has a higher capacity.

In an embodiment, a thickness of the first negative electrode active material layer is denoted as D1, volume particle size distribution Dv50 of the porous material is denoted as D0, and then the negative electrode plate satisfies 0.5≤D0/D1≤0.8; optionally, the negative electrode plate satisfies 0.6≤D0/D1≤0.7. A ratio of the Dv50 of the porous material to the thickness of the first negative electrode active material layer being within the range above facilitates formation of communicated pores in the first negative electrode active material layer, which further improves the resistance of the secondary battery.

In an embodiment, a thickness of the first negative electrode active material layer is denoted as D1, a thickness of the second negative electrode active material layer is denoted as D2, and then the negative electrode plate satisfies: 3≤D2/D1≤9; optionally, the negative electrode plate satisfies: 4≤D2/D1≤7.

In an embodiment, a thickness of the first negative electrode active material layer is less than or equal to 15µm; optionally the thickness of the first negative electrode active material layer is 5µm-13µm.

In an embodiment, the first negative electrode active material layer includes a first conductive agent.

Optionally, the first conductive agent includes at least one of graphite, superconducting carbon, acetylene black, Ketjenblack, conductive carbon black, graphene, carbon dots, carbon nanotubes, carbon nanofibers and graphite.

Optionally, in the first negative electrode active material layer, a mass percentage of the first conductive agent is greater than or equal to 25%, and more optionally 25%-40%.

In an embodiment, the first conductive agent includes graphite; the graphite satisfies at least one of conditions (I)- (V):
(I) a volume particle size distribution Dv50 of the graphite is 3µm-8µm, and optionally, 4µm-7µm;
(II) a volume particle size distribution Dv99 of the graphite is 9µm-15µm, and optionally, 10µm-13µm;
(III) in the first negative electrode active material layer, a mass percentage of the graphite is less than 40%, and optionally 25%-35%;
(IV) particle morphology of the graphite is primary particles;
(V) an initial coulomb efficiency of the graphite is 85%-93%, and optionally, 87%-92%.

In an embodiment, the first conductive agent includes carbon nanotubes.

Optionally, in the first negative electrode active material layer, a mass percentage of the carbon nanotubes is less than or equal to 5.0%.

Optionally, a tube diameter of the carbon nanotubes is 0.4nm-20nm.

Optionally, the carbon nanotubes include at least one of single-walled carbon nanotubes and multi-walled carbon nanotubes, and more optionally, include the single-walled carbon nanotubes.

In an embodiment, the first conductive agent includes carbon nanotubes, the thickness of the first negative electrode active material layer is denoted as D1, an axial length of the carbon nanotubes is denoted as L1, and the negative electrode plate satisfies L1/D1>1; optionally, the negative electrode plate satisfies 1.5≤L1/D1≤5.0.

In an embodiment, the first negative electrode active material layer includes a first binder;
optionally, a glass transition temperature the first binder is less than or equal to 25°C;
optionally, the first binder includes at least one of styrene-butadiene rubber, modified styrene-butadiene rubber, methyl acrylate, ethyl acrylate, butyl acrylate, lauryl acrylate and butadiene;
optionally, in the first negative electrode active material layer, a mass percentage of the first binder is greater than or equal to 15%, and more optionally 15%-25%.

By selecting a flexible binder with a relatively low glass transition temperature, the binder can be in a high elastic state in a relatively wide temperature interval, has a relatively high elastic limit and a relatively large elongation rate at break and can effectively control the volume expansion of the negative electrode plate in cooperation with a silicon-based material having a relatively large volume change.

In an embodiment, the second negative electrode active material includes graphite, and the graphite satisfies at least one of conditions (1) to (4):
(1) a mass percentage of the graphite is greater than or equal to 80%, and optionally 90%-96.5%;
(2) Dv50 of the graphite is 10µm -20µm, and optionally 12µm-18µm;
(3) Dv99 of the graphite is less than or equal to 45µm, and optionally, 30µm-42µm;
(4) morphology of the graphite is secondary particles.

In an embodiment, the second negative electrode active material layer includes graphite and the silicon-based material at the same time; optionally, in the second negative electrode active material layer, a mass percentage of the silicon-based material is less than or equal to 5%.

In an embodiment, the second negative electrode active material layer satisfies at least one of conditions (i)- (iii):
(i) the second negative electrode active material layer includes a second binder, and optionally, in the second negative electrode active material layer, a mass percentage of the second binder is less than or equal to 4%;
(ii) the second negative electrode active material layer includes a second conductive agent, and optionally, in the second negative electrode active material layer, a mass percentage of the second conductive agent is less than or equal to 1.5%;
(iii) the second negative electrode active material layer includes a second conductive agent, and the second conductive agent includes carbon nanotubes, and optionally, in the second negative electrode active material layer, a mass percentage of the carbon nanotubes is less than or equal to 0.15%.

In a second aspect, the present disclosure further provides a preparation method for the secondary battery, including following steps for preparing a negative electrode plate:
preparing first negative electrode slurry, the first negative electrode slurry including a silicon-based material and a porous material;
preparing second negative electrode slurry;
coating the first negative electrode slurry on at least one surface of a negative electrode current collector to prepare a first negative electrode active material layer;
coating the second negative electrode slurry on a surface of the first negative electrode active material layer away from the negative electrode current collector to prepare a second negative electrode active material layer.

In some embodiments, solid content of the first negative electrode slurry is less than or equal to 30%, and optionally 15%-25%. Under a condition that the content of the carbon nanotubes and the binder is relatively high, controlling the solid content of the first negative electrode slurry to be within the range above can ensure good dispersity and proper viscosity of the slurry and facilitate preparation of the negative electrode plate.

In a third aspect, the present disclosure further provides an electric device, including the secondary battery selected from above or a secondary battery prepared by the above preparation method.

The details of one or more embodiments of the present disclosure are set forth in the following drawings and description, and other features, objects, and advantages of the present disclosure will become apparent from the description, drawings, and claims.

### BRIEF DESCRIPTION OF DRAWINGS

FIG. 1 is a view of a scanning electron microscope image (SEM) of a cross section of a negative electrode plate according to an embodiment of the present disclosure;
FIG. 2 is a partially enlarged view of the scanning electron microscope image (SEM) of FIG. 1;
FIG. 3 is a schematic diagram of a secondary battery according to an embodiment of the present disclosure;
FIG. 4 is an exploded view of a secondary battery according to an embodiment of the present disclosure shown in FIG. 3;
FIG. 5 is a schematic diagram of a battery module according to an embodiment of the present disclosure;
FIG. 6 is a schematic diagram of a battery pack according to an embodiment of the present disclosure;
FIG. 7 is an exploded view of a battery pack according to an embodiment of the present disclosure shown in FIG. 6;
FIG. 8 is a schematic diagram of an electric device using a secondary battery as a power supply according to an embodiment of the present disclosure.

### DESCRIPTION OF REFERENCE SIGNS:

1 battery pack; 2 upper box body; 3 lower box body; 4 battery module; 5 secondary battery; 51 housing; 52 electrode assembly; 53 cover plate; 6 electric device.

In order to better describe and illustrate those embodiments and/or examples of the inventions disclosed herein, reference may be made to one or more of the accompanying drawings. Additional details or examples for describing the drawings should not be considered limiting the scope of any of the disclosed inventions, presently described embodiments and/or examples, and presently understood best modes of these inventions.

### DESCRIPTION OF EMBODIMENTS

In order to facilitate understanding of the present disclosure, the present disclosure is described more fully below with reference to the related drawings. Preferred embodiments of the present disclosure are given in the drawings. However, the present disclosure may be implemented in many different forms and is not limited to the embodiments described herein. Conversely, the purpose of providing these embodiments is to make the understanding of the disclosed content of the present disclosure more thorough and comprehensive.

Unless otherwise defined, all technical and scientific terms used herein have the same meaning as commonly understood by one skilled in the technical field of the present disclosure. The terms used herein in the specification of the present disclosure is for the purpose of describing particular embodiments only and is not intended to limit the present disclosure. As used herein, the term "and/or" includes any and all combinations of one or more of associated listed items.

The present disclosure provides a secondary battery, a battery module using the secondary battery, a battery pack and an electric device. The secondary battery is applicable to various electric devices using batteries, such as a mobile phone, a portable apparatus, a notebook computer, an electric scooter, an electric toy, an electric tool, an electric vehicle, a ship, a spacecraft and the like; for example, the spacecraft includes an airplane, a rocket, a space shuttle, a spacecraft and the like.

The secondary battery, the battery module, the battery pack and the electric device of the present disclosure are described with reference to the accompanying drawings.

### Secondary battery

A first aspect of the present disclosure provides a secondary battery, which includes a negative electrode plate described below.

The secondary battery is also referred to as a rechargeable battery or a storage battery, referring to a battery which can continue to be used by activating an active material through charging after the battery is discharged.

Generally, the secondary battery includes a positive electrode plate, a negative electrode plate, an isolation film and electrolyte. In a charging-discharging process of the battery, active ions (such as lithium-ions) intercalate and deintercalate back and forth between the positive electrode plate and the negative electrode plate. The isolation film is arranged between the positive electrode plate and the negative electrode plate and mainly plays a role in preventing short circuits of positive and negative electrodes, and meanwhile, allowing active ions to pass through. The electrolyte is between the positive electrode plate and the negative electrode plate and mainly plays a role in conducting the active ions.

### Negative electrode plate

In the embodiment of the present disclosure, the negative electrode plate includes: a negative electrode current collector, a first negative electrode active material layer and a second negative electrode active material layer. The first negative electrode active material layer is disposed on at least one surface of the negative electrode current collector, and the first negative electrode active material layer includes a silicon-based material and a porous material. The second negative electrode active material layer is disposed on a surface of the first negative electrode active material layer away from the negative electrode current collector.

In the secondary battery of the present disclosure, by adding the porous material into the first negative electrode active material layer, in the charging-discharging process, the silicon-containing negative electrode plate of the present disclosure has a relatively low cycle expansion rate, so that the secondary battery has a relatively high capacity, a relatively good cycle performance and a relatively low resistance concurrently.

In some embodiments, for the negative electrode current collector, a metal foil or a composite current collector may be used. For example, as a metal foil, a copper foil can be used. The composite current collector may include a polymer material substrate and a metal layer formed on at least one surface of the polymer material substrate. The composite current collector can be formed by forming a metal material, such as copper, copper alloy, nickel, nickel alloy, titanium, titanium alloy, silver and silver alloy, on the polymer material substrate. The polymer material substrate includes a substrate such as polypropylene (PP), polyethylene terephthalate (PET), polybutylene terephthalate (PBT), polystyrene (PS), polyethylene (PE) and the like.

In some embodiments, the porous material includes at least one of porous carbon, porous metal, and porous ceramic.

Optionally, the porous carbon includes at least one of porous graphite, porous resin carbon, porous biomass carbon, activated carbon, porous carbon fibers and expanded graphite.

Optionally, the porous metal includes at least one of porous nickel, porous copper, porous titanium, porous gold, porous stainless steel and porous metal alloy material (such as an Al-Mg-Si alloy material).

Optionally, the porous ceramic includes at least one of porous Si₃N₄, porous Al₂O₃ and porous SiC.

Applying the porous material above to the negative electrode plate can improve the resistance and the cycle performance of the secondary battery and will not result in deterioration of an electrochemical performance of the negative electrode plate.

In some embodiments, a pore diameter of the porous material is 10nm-1000nm, and optionally, 30nm-300nm. Optionally, the pore diameter of the porous material can be a range formed by any numerical value below: 10nm, 20nm, 50nm, 100nm, 200nm, 500nm, 800nm or 1000nm. The pore diameter of the porous material being within the range above is favorable for lithium-ion transmission and a cycle expansion rate of the negative electrode plate and further improves the resistance and the cycle performance of the secondary battery.

In some embodiments, a porosity P of the porous material satisfies P≥30%. Optionally, 40%≤P≤80%. The porosity of the porous material being within the range above can improve the lithium-ion transmission performance and the cycle expansion rate of the negative electrode plate, and the secondary battery has a relatively low resistance and a relatively good cycle performance.

The pore diameter of the porous material refers to an average pore diameter of the porous material and is a well-known meaning in the art, and it can be tested by adopting a method known in the art. An evaluation method of the average pore diameter can adopt a Tristar 3020 type pore diameter distributor for testing with reference to GB/T 19587-2017 and GB/T 21650.2-2008. At a constant temperature, an adsorption gas can be adsorbed on a to-be-tested material under a series of gradually rising pressures, and through a curve plot of volumes of pore diameters of various levels and corresponding partial pressures, the pore diameter distribution of the porous material can be represented; and meanwhile, the average pore diameter can be calculated.

The porosity is defined by a following equation: porosity = (1-(mass of porous material [g]/volume of porous material [cm³]/ true density of material))* 100[%]. The porosity of a solid material can be measured by using a GB/T 21650.2-2008 mercury injection method and a gas adsorption method. In the present disclosure, a porosity testing method is that: the true density of the material is obtained through testing by an AccuPyc 1340 type true density instrument. A specific operation is as follows: weighing a sample of a certain mass, placing it in the true density tester, sealing a test system, introducing helium gas according to a procedure. By detecting gas pressures in a sample chamber and an expansion chamber, a real volume Vr can be calculated according to the Boyle's law (PV = nRT), and then the real density is ρr=m/Vr. An apparent density of the material can be obtained by loading a certain mass of powder into a cylindrical mold with an inner diameter of 10 mm and applying a pressure of 100MPa to obtain an apparent volume V0 of the corresponding powder, and the apparent density of the material is ρ0 = m/V0. The material porosity P=1-ρ0/ρr × 100%. The porosity in the present disclosure is obtained by testing according to the same method.

In some embodiments, in the first negative electrode active material layer, a mass percentage of the porous material is less than or equal to 10%, and optionally 2%-8%. Optionally, in the first negative electrode active material layer, the mass percentage of the porous material can be in a range formed by any numerical value below: 2%, 3%, 4%, 5%, 6%, 7%, 8%, 9% or 10%. By controlling content of the porous material in the first negative electrode active material layer within the above range, the secondary battery has a relatively low resistance and a relatively good cycle performance while having relatively high capacity and energy density.

In some embodiments, the silicon-based material can be selected from one or more of elemental silicon, silicon-oxygen compound (such as silicon monoxide), silicon-carbon compound, silicon-nitrogen compound, silicon alloy and pre-lithiated silicon-oxygen compound; and optionally, it can be at least one of silicon-carbon compound, silicon-oxygen compound and pre-lithiated silicon-oxygen compound.

In some embodiments, in the first negative electrode active material layer, a mass percentage of the silicon-based material is greater than or equal to 30%, and optionally 40%-60%. The silicon-based material has a relatively high theoretical capacity; with content of the silicon-based material in the first negative electrode active material layer being within the range above, the secondary battery has a higher capacity, and meanwhile, the relatively low cycle expansion rate of the negative electrode plate can be ensured, and the cycle performance is improved.

In some embodiments, a thickness of the first negative electrode active material layer is denoted as D1, volume particle size distribution Dv50 of the porous material is denoted as D0, and then the negative electrode plate satisfies 0.5≤D0/D1≤0.8. Optionally, 0.6≤D0/D1≤0.7. A ratio of the Dv50 of the porous material to the thickness of the first negative electrode active material layer being within the range above facilitates formation of communicated pores in the first negative electrode active material layer, which further improves the resistance of the secondary battery.

In the present disclosure, the Dv50 refers to a corresponding particle size when the cumulative particle size distribution number of particles reaches 50% in a volume cumulative distribution curve, and a physical meaning thereof is that particles, of which the particle size is smaller than (or greater than) this particle size, accounts for 50%. As an example, the Dv50 can be conveniently measured by adopting a laser particle size analyzer with reference to a GB/T 19077-2016 particle size distribution laser diffraction method, for example, a Mastersizer 2000E type laser particle size analyzer from a British Markov Instrument Limited Company.

In the present disclosure, the thickness of the negative electrode active material layer can be tested by selecting a method known in the art; for example, it can be tested through a step profiler test method. A measuring probe of a step profiler slightly draws across a surface of the sample with a very tiny force, high and low fluctuations of micron or even nano-level on the surface of the sample are amplified by millions of times through a sensor connected with the measuring probe, then converted into electronic signals, input into a computer software and finally displayed in a data form of digital and graph.

In some embodiments, the thickness of the first negative electrode active material layer is denoted as D1, a thickness of the second negative electrode active material layer is denoted as D2, and then the negative electrode plate satisfies: 3≤D2/D1≤ 9. Optionally, 4≤D2/D1≤7. By setting of the thicknesses above, the negative electrode plate can inhibit volume expansion of the silicon-based material in the charging-discharging process while having a relatively high capacity, so that the capacity utilization of the secondary battery can be better.

In some embodiments, the thickness of the first negative electrode active material layer is less than or equal to 15µm, and optionally 5µm-13µm.

In some embodiments, the first negative electrode active material layer includes a first conductive agent. The first conductive agent can improve an electronic conductivity performance of the first negative electrode active material layer.

In some embodiments, the first conductive agent includes at least one of graphite, superconducting carbon, acetylene black, Ketjenblack, conductive carbon black, graphene, carbon dots, carbon nanotubes, carbon nanofibers and graphite. Optionally, the first conductive agent includes at least one of graphite, carbon nanotubes and conductive carbon black.

In some embodiments, in the first negative electrode active material layer, a mass percentage of the first conductive agent is greater than or equal to 25%, and more optionally 25%-40%. The silicon-based material has a relatively poor conductivity, and the inventor's research finds that in the first negative electrode active material layer, content of the first conductive agent being within the range above can effectively improve cycle expansion of the silicon-based material while forming a good conductive network, so that the capacity utilization and the cycle performance of the secondary battery are improved.

In some embodiments, the first conductive agent includes graphite.

In some embodiments, the volume particle size distribution Dv50 of the graphite is 3µm-8µm, and optionally, 4µm-7µm. Selecting small-particle graphite with the Dv50 being in the above range can facilitate to form a conductive network on the surface of the silicon-based material while buffering expansion of the silicon-based material.

In some embodiments, the volume particle size distribution Dv99 of the graphite is 9µm-15µm, and optionally, 10µm-13µm. By selecting the graphite with the Dv99 not exceeding 15µm, the particle size of the graphite is further controlled, and the cycle performance of the secondary battery is better.

In some embodiments, in the first negative electrode active material layer, the mass percentage of the graphite is less than 40%, and optionally 25%-35%.

In some embodiments, particle morphology of the graphite is primary particles.

In some embodiments, an initial coulomb efficiency of the graphite is 85%-93%, and optionally, 87%-92%.

In some embodiments, the first conductive agent includes carbon nanotubes.

In some embodiments, in the first negative electrode active material layer, a mass percentage of the carbon nanotubes is less than or equal to 5.0%, and optionally 0.5%-2%. Content of the carbon nanotubes being within the above range can further improve the capacity utilization and the cycle performance of the secondary battery.

In some embodiments, a tube diameter of the carbon nanotubes is 0.4nm-20nm. Optionally, the tube diameter of the carbon nanotubes can be a range formed by any of following numerical values: 0.4nm, 0.8nm, 1nm, 2nm, 4nm, 5nm, 8nm, 10nm, 12nm, 15nm, 18nm or 20nm. The carbon nanotubes with the tube diameter in the above range have relatively good mechanical property and good conductivity, and the cycle performance of the secondary battery can be further improved.

In some embodiments, the carbon nanotubes include at least one of single-walled carbon nanotubes and multi-walled carbon nanotubes, and optionally, includes the single-walled carbon nanotube.

In some embodiments, the first conductive agent includes the carbon nanotube, the thickness of the first negative electrode active material layer is denoted as D 1, an axial length of the carbon nanotubes is denoted as L1, and the negative electrode plate satisfies L1/D1>1; optionally, the negative electrode plate satisfies 1.5≤L1/D1≤5.0.

In some embodiments, the first negative electrode active material layer includes a first binder.

In some embodiments, the first binder is a binder having a glass transition temperature of less than or equal to 25°C. The first binder can include but is not limited to at least one of styrene-butadiene rubber, modified styrene-butadiene rubber, methyl acrylate, ethyl acrylate, butyl acrylate, lauryl acrylate and butadiene. By selecting the binder with a relatively low glass transition temperature, the binder can be in a high elastic state in a relatively wide temperature interval, has a relatively high elastic limit and a relatively large elongation rate at break and can effectively control the volume expansion of the negative electrode plate in cooperation with a silicon-based material having a relatively large volume change.

In some embodiments, in the first negative electrode active material layer, the mass percentage of the first binder is greater than or equal to 15%, and more optionally 15%-25%. Controlling the content of the first binder to be within the above range can effectively inhibit the expansion of the silicon-based material and improve the cycle performance of the secondary battery.

In some embodiments, the first negative electrode active material layer optionally includes other additives such as a dispersant (such as carboxymethyl cellulose or a sodium salt thereof (CMC-Na)) or the like.

In the present disclosure, it should be understood that a sum of various components (such as the silicon-based material, the porous material, the first conductive agent, the first binder and optional other additives) in the first negative electrode active material layer is 100 mass%.

In some embodiments, the second negative electrode active material layer includes a second negative electrode active material. The second negative electrode active material may adopt a negative electrode active material for batteries known in the art. As an example, the second negative electrode active material can include at least one of graphite, soft carbon, hard carbon, a silicon-based material, a tin-based material, lithium titanate and the like. The silicon-based material can be selected from at least one of elemental silicon, silicon-oxygen compound, silicon-carbon compound, silicon-nitrogen compound and silicon alloy. A tin-based material can be selected from at least one of elemental tin, tin-oxygen compound and tin alloy. However, the present disclosure is not limited to these materials, and other conventional materials that can be used as battery negative electrode active materials can also be used. These negative electrode active materials can be used alone or in combination of more than two.

In some embodiments, the second negative electrode active material layer includes graphite.

Optionally, the graphite includes at least one of artificial graphite and natural graphite.

In some embodiments, in the second negative electrode active material layer, a mass percentage of the graphite is greater than or equal to 80%; optionally 90-96.5%.

In some embodiments, a volume distribution particle size Dv50 of the graphite is 10-20µm, and optionally 12µm-18µm.

In some embodiments, a volume distribution particle size Dv99 of the graphite is less than or equal to 45µm, and optionally, 30µm-42µm.

In some embodiments, morphology of the graphite is secondary particles.

In some embodiments, the second negative electrode active material layer includes graphite and the silicon-based material at the same time; optionally, in the second negative electrode active material layer, the mass percentage of the silicon-based material is less than or equal to 5%. Content of the silicon-based material in the second negative electrode active material layer being within the range can reduce contact deterioration of the silicon-based material and the electrolyte. Meanwhile, controlling the silicon content in the second active material layer arranged away from the negative electrode current collector to be relatively low can further reduce the cycle expansion rate of the negative electrode plate, avoid the deterioration of the negative electrode plate and improve the cycle performance of the secondary battery while ensuring a relatively high capacity.

In some embodiments, the second negative electrode active material layer includes a second binder. Optionally, the second binder can include at least one of styrene butadiene rubber (SBR), polyacrylic acid (PAA), polyacrylonitrile (PAN), sodium polyacrylate (PAAS), polyacrylamide (PAM), polyvinyl alcohol (PVA), sodium alginate (SA), polymethacrylic acid (PMAA) and carboxymethyl chitosan (CMCS).

Optionally, in the second negative electrode active material layer, the mass percentage of the second binder is less than or equal to 4%, and optionally 1.5%-3%.

In some embodiments, the second negative electrode active material layer includes a second conductive agent. Optionally, the second conductive agent includes at least one of superconducting carbon, acetylene black, carbon black, Ketjen black, carbon dots, carbon nanotubes, graphene and carbon nanofibers.

Optionally, in the second negative electrode active material layer, a mass percentage of the second conductive agent is less than or equal to 1.5%, such as 0.5%-1.0%.

In some embodiments, the second conductive agent includes carbon nanotubes; optionally, in the second negative electrode active material layer, a mass percentage of the carbon nanotubes is less than or equal to 0.15%.

In some embodiments, the second negative electrode active material layer also optionally includes other additives such as a thickener (e.g., sodium carboxymethyl cellulose (CMC-Na)) or the like.

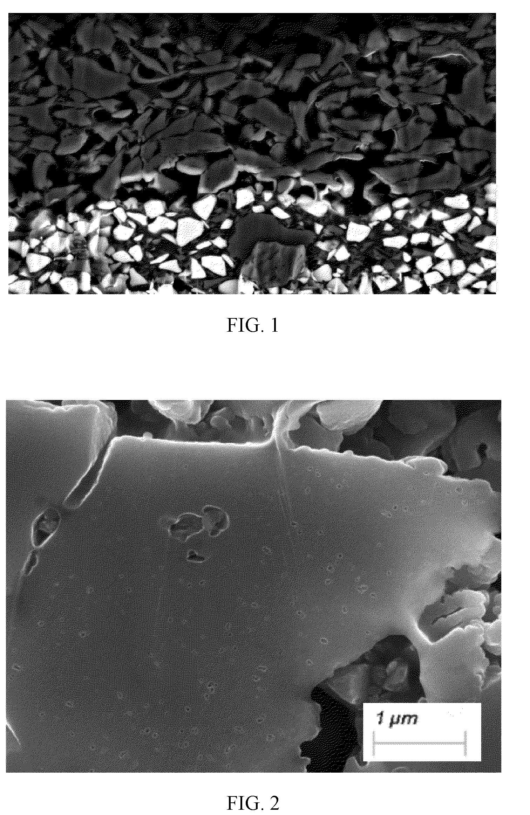

FIG. 1 is a scanning electron microscope image (SEM) of a cross section of a negative electrode plate according to an embodiment of the present disclosure. It can be obviously seen from the figure that the negative electrode current collector of the negative electrode plate is sequentially provided with the first negative electrode active material layer and the second negative electrode active material layer, the thickness of the first negative electrode active material layer is smaller than that of the second negative electrode active material layer, and a thickness ratio is 3≤D2/D1≤9. FIG. 2 is a partially enlarged view of the scanning electron microscope image (SEM) of FIG. 1, and it can be seen from the figure that the first negative electrode active material layer has rich porous structures.

It should be noted that various parameter tests above can be carried out by sampling for test in a preparation process of the secondary battery and can also be carried out by sampling for test from the prepared secondary battery.

When a test sample is sampled from the prepared secondary battery, as an example, the sampling can be carried out according to following steps:
(1) discharging the secondary battery (for a purpose of safety, generally, the battery is left in a fully discharged state); disassembling the battery, then taking out the negative electrode plate, and soaking the negative electrode plate for a certain time (for example, 2-10 hours) by using dimethyl carbonate (DMC); and then taking out the negative electrode plate, drying it at a certain temperature for a certain time (for example, 40°C-70°C, 2-5 hours), and after drying, taking out the negative electrode plate. At this time, a sample can be taken from the dried negative electrode plate for testing various parameters related to the negative electrode active material layer above (such as a surface density, a compacted density, a thickness and the like of the negative electrode active material layer) of the present disclosure.
(2) Baking the negative electrode plate dried in the step (1) at a certain temperature for a certain time (for example, 200-500°C, 1 hour-3 hours), randomly selecting a region in the baked negative electrode plate; firstly sampling the second negative electrode active material layer (selecting a blade for powder scraping to take a sample), with a powder scraping depth not exceeding a boundary region of the first negative electrode active material layer and the second negative electrode active material layer; and then sampling the first negative electrode active material layer in the same manner. In the preparation process of the negative electrode active material layer, the boundary region between the first negative electrode active material layer and the second negative electrode active material layer may have a fusion layer (that is, two negative electrode active materials exist in the fusion layer at the same time). Therefore, for the sake of accuracy of the test, when sampling the first negative electrode active material layer, the fusion layer can be scraped off first, and then powder scraping is carried out on the first negative electrode active material layer to take a sample.
(3) Sieving the negative electrode active material collected in the step (2) (for example, sieving with a sieve having 100 meshes-300 meshes), and finally obtaining the sample of the negative electrode active material which can be used for testing the various material parameters (such as a particle size, a specific surface area and the like) of the present disclosure.

In the sampling process, an optical microscope or a scanning electron microscope can be used for assisting in judging a position of the boundary region between the first negative electrode active material layer and the second negative electrode active material layer.

In the present disclosure, a mass proportion of the silicon-based material in the negative electrode active material layer can be determined by using instruments and methods commonly known in the art. For example, when the test sample is sampled from the prepared secondary battery, the silicon-based material is obtained through the steps above. The silicon-based material is digested with reference to an EPA-3052-1996 "Microwave Acid Digestion Method of Silicate", then content of the silicon element is measured by adopting an ICAP-7000 type inductively coupled plasma emission spectrometer (ICP-OES) of the Thermo Fisher Scientific company according to an EPA 6060D-2014 "Inductively Coupled Plasma Atomic Emission Spectrometry". A specific test method is as follows: adopting 10 mL of nitric acid with a mass fraction of 65% and 10 mL of hydrofluoric acid with a mass fraction of 40% to carry out microwave digestion on 0.5g of the silicon-based material sample, and after digestion, adding it into a 50 mL volumetric flask for constant volume, then determining the content of the silicon element by adopting ICAP-7000 type ICP-OES, to calculate the mass proportion of the silicon-based material according to the content of the silicon element.

According to the present disclosure, the mass proportions of the binder and the dispersant in the negative electrode active material layer can be measured at the same time by using instruments and methods commonly known in the art. For example, when the test sample is sampled from the prepared secondary battery, the powder material is obtained through the above steps, and the mass proportions of the binder and the dispersant can be tested through a thermal weight method (a thermogravimetric analyzer can be used as the test equipment).

In the present disclosure, the mass proportion of the conductive agent in the negative electrode active material layer can be determined by using instruments and methods commonly known in the art. For example, when the test sample is sampled from the prepared secondary battery, the powder material is obtained through the steps above, and the mass proportions of the silicon-based material, the binder and the dispersant are tested through the method given above; and the mass proportion of the conductive agent = the mass proportion of the first negative electrode film layer - the mass proportion of the silicon-based material - the mass proportion of the binder - the mass proportion of the dispersant.

In addition, the various parameters of the first negative electrode active material layer and the second negative electrode active material layer provided by the present disclosure, such as the thickness of the first negative electrode active material layer, all refer to parameter ranges of a single surface of the negative electrode plate. When the two surfaces of the negative electrode current collector are both provided with the first negative electrode active material layer and the second negative electrode active material layer, as long as the parameters of the first negative electrode active material layer or the second negative electrode active material layer on any surface meet the present disclosure, it is considered to fall into the protection scope of the present disclosure. Moreover, the ranges of parameters, such as the thickness of the negative electrode active material layer of the present disclosure, all refer to parameters of the film layer that is cold pressed into compaction and used for assembling the battery.

In some embodiments, the negative electrode plate can be prepared by following steps S110-S130:
step S110: separately preparing first negative electrode slurry and second negative electrode slurry, the first negative electrode slurry including a silicon-based material and a porous material.
Step S120: coating the first negative electrode slurry on at least one surface of a negative electrode current collector to prepare a first negative electrode active material layer;
step S130: coating the second negative electrode slurry on a surface of the first negative electrode active material layer away from the negative electrode current collector to prepare a second negative electrode active material layer.

In some embodiments, solid content of the first negative electrode slurry is less than or equal to 30%, and optionally 20%-25%. Under a condition that the content of the carbon nanotubes and the binder is relatively high, controlling the solid content of the first negative electrode slurry to be within the range above can ensure good dispersity and proper viscosity of the slurry and facilitate preparation of the negative electrode plate.

In some embodiments, the first negative electrode slurry and the second negative electrode slurry can be coated at the same time through a double-cavity coating equipment, and it is also feasible that the first negative electrode slurry is coated first and then the second negative electrode slurry is coated with the coating equipment.

The first negative electrode slurry is coated on the surface of the negative electrode current collector to form the first negative electrode active material layer, and the second negative electrode slurry is coated on the first negative electrode active material layer to form the second negative electrode active material layer; and finally, the negative electrode plate can be obtained through processes of drying, cold pressing and the like.

An embodiment of the present disclosure further provides a preparation method of the secondary battery, which includes preparing the negative electrode plate according to the steps above.

### Positive electrode plate

The positive electrode plate includes a positive electrode current collector and a positive electrode active material layer provided on at least one surface of the positive electrode current collector, and the positive electrode active material layer includes the positive electrode active material.

As an example, the positive electrode current collector has two surfaces opposite to each other in its own thickness direction, and the positive electrode active material layer is disposed on any one or both of two opposite surfaces of the positive electrode current collector.

In some embodiments, the positive electrode current collector may be a metal foil or a composite current collector. For example, as a metal foil, an aluminum foil may be used. The composite current collector may include a polymer material substrate and a metal layer formed on at least one surface of the polymer material substrate. The composite current collector may be formed by forming a metal material, such as aluminum, aluminum alloy, nickel, nickel alloy, titanium, titanium alloy, silver, silver alloy and the like, on polymer material substrate. The polymer material substrate includes a substrate such as polypropylene (PP), polyethylene terephthalate (PET), polybutylene terephthalate (PBT), polystyrene (PS), polyethylene (PE), etc.

In some embodiments, the positive electrode active material may be a positive electrode active material for a battery known in the art. As an example, the positive electrode active material may include at least one of following materials: lithium-containing phosphate of an olivine structure, lithium transition metal oxide, and respective modified compounds thereof. However, the present disclosure is not limited to these materials, and other traditional materials that may be used as positive electrode active materials of the battery may also be used. These positive electrode active materials may be used alone or in combinations of two or more. Examples of lithium transition metal oxides may include, but are not limited to, at least one of lithium cobalt oxide (e.g., LiCoO₂), lithium nickel oxide (e.g., LiNiO₂), lithium manganese oxide (e.g., LiMnO₂, LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂) (which may also be referred to as NCM₃₃₃ for short), LiNi_{0.5}Co_{0.2}Mn_{0.3}O₂ (which may also be referred to as NCM₅₂₃ for short), LiNi_{0.5}Co_{0.25}Mn_{0.25}O₂ (which may also be referred to as NCM₂₁₁ for short), LiNi_{0.6}Co_{0.2}Mn_{0.2}O₂ (which may also be referred to as NCM₆₂₂ for short), LiNi_{0.8}Co_{0.1}Mn_{0.1}O₂ (which may also be referred to as NCMsn for short), lithium nickel cobalt aluminum oxide (e.g., LiNi_{0.85}Co_{0.15}Al_{0.05}O₂), and modified compound thereof and the like. Examples of lithium-containing phosphates of olivine structures may include, but are not limited to, at least one of lithium iron phosphate (such as LiFePO₄ (which may also be referred to as LFP for short)), a composite material of lithium iron phosphate and carbon, lithium manganese phosphate (such as LiMnPO₄), a composite material of lithium manganese phosphate and carbon, lithium iron manganese phosphate, and a composite material of lithium iron manganese phosphate and carbon.

In some embodiments, the positive electrode active material layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode active material layer further optionally includes a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared by a manner below: dispersing the above components used for preparing the positive electrode plate, such as the positive electrode active material, the conductive agent, the binder and any other components in a solvent (such as N-methylpyrrolidone), to form positive electrode slurry; coating the positive electrode slurry on the positive electrode current collector, and obtaining the positive electrode plate after drying, cold pressing and other processes.

### Electrolyte

The electrolyte plays a role in conducting ions between the positive electrode plate and the negative electrode plate. The present disclosure does not specifically limit a type of the electrolyte, and it may be selected according to requirements. For example, the electrolyte may be in a liquid state, a gel state, or an all-solid state.

In some embodiments, the electrolyte is electrolyte-solution. The electrolyte-solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis (fluorosulfonyl) imide, lithium bis (trifluoromethanesulfonyl) imide, lithium trifluoromethanesulfonate, lithium difluorophosphate, lithium difluoroborate, lithium bis(oxalate) borate, lithium difluorobisoxalato phosphate, and lithium tetrafluorooxalate phosphate.

In some embodiments, the solvent may be selected from at least one of ethylene carbonate, propylene carbonate, methyl ethyl carbonate, diethyl carbonate, dimethyl carbonate, propylene carbonate, methyl carbonate, ethylene carbonate and butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte further optionally includes an additive. For example, the additive may include a negative electrode film-forming additive and a positive electrode film-forming additive, and it may further include additives capable of improving certain performances of the battery, such as additives for improving an overcharge performance of the battery, additives for improving a high-temperature or low-temperature performance of the battery, and the like.

### Isolation Film

In some embodiments, the secondary battery further includes an isolation film. A type of the isolation film is not particularly limited in the present disclosure, and any well-known porous structure isolation film with good chemical stability and mechanical stability can be selected.

In some embodiments, a material of the isolation film may be selected from at least one of glass fiber, non-woven fabric, polyethylene, polypropylene, and polyvinylidene fluoride. The isolation film may be a single-layer thin film or may be a multi-layer composite thin film, which is not particularly limited. When the isolation film is the multi-layer composite thin film, materials of respective layers may be the same or different, which is not particularly limited.

In some embodiments, the positive electrode plate, the negative electrode plate, and the isolation film may be made into an electrode assembly by means of a winding process or a lamination process.

In some embodiments, the secondary battery may include an outer package. The outer package may be configured to encapsulate the electrode assembly and the electrolyte above.

In some embodiments, the outer package of the secondary battery may be a hard housing, such as a hard plastic housing, an aluminum housing, a steel housing, and the like. The outer package of the secondary battery may also be a soft package, such as a soft bag. A material of the soft package may be plastic, and as for the plastic, polypropylene, polybutylene terephthalate, polybutylene succinate, and the like may be listed as examples.

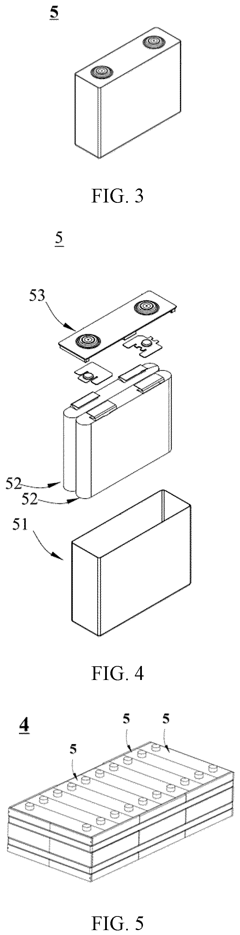

A shape of the secondary battery is not particularly limited in the present disclosure, and it can be cylindrical, square, or any other shape. For example, FIG. 3 is a secondary battery 5 having a square structure as an example.

In some embodiments, referring to FIG. 4, the outer package may include a housing 51 and a cover plate 53. The housing 51 may include a bottom plate and a side plate connected to the bottom plate, and the bottom plate and the side plate enclose to form an accommodating cavity. The housing 51 has an opening in communication with the accommodating cavity, and the cover plate 53 can be disposed to cover the opening in order to close the accommodating cavity. The positive electrode plate, the negative electrode plate, and the isolation film may form an electrode assembly 52 through a winding process or a lamination process. The electrode assembly 52 is encapsulated in the accommodating cavity. The electrolyte is infiltrated in the electrode assembly 52. Number of the electrode assembly 52 contained in the secondary battery 5 may be one or more, and those skilled in the art may select according to specific actual requirements.

In some embodiments, the secondary battery may be assembled into a battery module, and number of the secondary battery contained in the battery module may be one or more, specific number of which may be selected by those skilled in the art according to an application and a capacity of the battery module.

FIG. 5 is a battery module 4 as an example. Referring to FIG. 5, in the battery module 4, a plurality of the secondary batteries 5 may be sequentially arranged along a length direction of the battery module 4. Certainly, they can also be arranged in any other manner. The plurality of the secondary batteries 5 can be further fixed by a fastener.

Optionally, the battery module 4 may further include an outer shell having an accommodating space, and the plurality of the secondary batteries 5 are accommodated in the accommodating space.

In some embodiments, the battery module above can also be assembled into a battery pack, and number of the battery module contained in the battery pack can be one or more, specific number of which can be selected by those skilled in the art according to an application and a capacity of the battery pack.

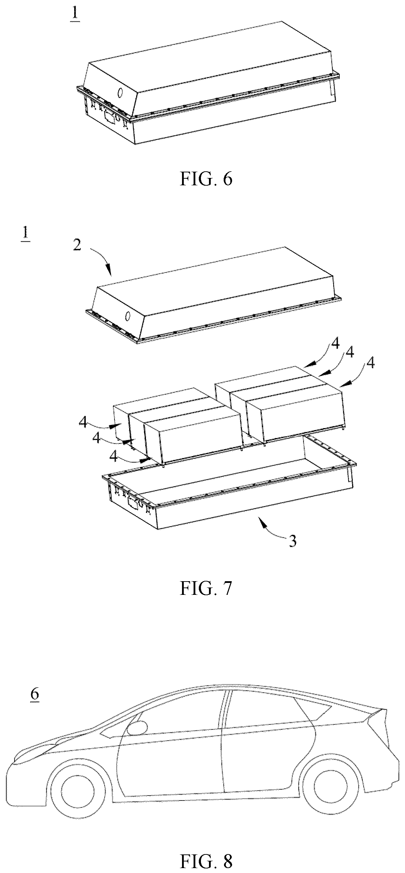

FIG. 6 and FIG. 7 shows a battery pack 1 as an example. Referring to FIG. 6 and FIG. 7, the battery pack 1 can include a battery box and a plurality of the battery modules 4 arranged in the battery box. The battery box includes an upper box body 2 and a lower box body 3, and the upper box body 2 can be disposed to cover the lower box body 3 and form a closed space for accommodating the battery module 4. The plurality of the battery modules 4 can be arranged in the battery box in any manner.

In addition, the present disclosure further provides an electric device, and the electric device includes at least one of the secondary battery, the battery module and the battery pack provided by the present disclosure. The secondary battery, the battery module, or the battery pack can be used as a power supply for the electric device and can also be used as an energy storage unit of the electric device. The electric device may include a mobile device, an electrical vehicle, an electrical train, a ship, a satellite, an energy storage system and the like, but it is not limited thereto. The mobile device can be, for example, a mobile phone, a notebook computer, etc.; the electric vehicle can be, for example, a pure electric vehicle, a hybrid electric vehicle, a plug-in hybrid electric vehicle, an electric bicycle, an electric scooter, an electric golf cart, an electric truck, etc.

For the electric device, the secondary battery, the battery module or the battery pack can be selected according to use requirements thereof.

FIG. 8 is an electric device 6 as an example. The electric device 6 is a pure electric vehicle, a hybrid electric vehicle, a plug-in hybrid electric vehicle and the like. In order to meet requirements of the electric device for high power and high energy density of the secondary battery, a battery pack or a battery module can be adopted.

A device as another example can be a mobile phone, a tablet computer, a notebook computer and the like. The device is usually required to be light and thin, and the secondary battery can be used as a power supply.

### Embodiments

Embodiments of the present disclosure will be explained below. The embodiments described below are exemplary, only used for explaining the present disclosure and cannot be understood as limitation to the present disclosure. Specific techniques or conditions, which are not specified in the embodiments, are implemented in accordance with techniques or conditions described in literature in the art or in accordance with a specification of a product. Adopted reagents or instruments, with no specified manufacturers, are all conventional products which are commercially available.

### Embodiment 1:

preparation of the negative electrode plate:
the first negative electrode slurry: fully stirring and mixing silicon monoxide, the first binder, the dispersant (CMC-Na), the first conductive agent and the porous material in deionized water to prepare the first negative electrode slurry. Dv50 of silicon monoxide is 6.8µm, Dv50 of graphite in the first conductive agent is 3.5µm, and the carbon nanotubes (CNT) has a tube diameter of 2nm and an axial length of 15µm.

Second negative electrode slurry: fully stirring and mixing the artificial graphite, the binder (SBR), the dispersant (CMC-Na), conductive carbon black (Super-P, SP) in deionized water according to a mass ratio of 96.2%: 1.8%: 1.2%: 0.8% to prepare the second negative electrode slurry, and Dv50 of the artificial graphite is 14.3µm.

The first negative electrode slurry is uniformly coated on a current collector copper foil with a thickness of 8µm and dried to form the first negative electrode active material layer, the second negative electrode slurry is uniformly coated on the first negative electrode active material layer and dried to form the second negative electrode active material layer, and after cold pressing and cutting, the negative electrode plate is obtained. The thickness of the first negative electrode active material layer is 12µm, the thickness of the second negative electrode active material layer is 39µm, a compacted density of the negative electrode plate is 1.65g/cm³, a coating weight is 8.2mg/cm², and the mass percentage of the silicon monoxide in the first negative electrode active material layer is 40%.

The preparation of the positive electrode plate: dissolving the positive electrode active material LiNi_{0.8}Co_{0.1}Mn_{0.1}O₂(NCM₈₁₁), the binder polyvinylidene fluoride (PVDF) and the conductive agent acetylene black in a solvent N-methyl pyrrolidone (NMP) according to a mass ratio of 97%: 1.5%: 1.5%, and fully stirring and uniformly mixing to prepare the positive electrode slurry; uniformly coating the positive electrode slurry on the positive electrode current collector aluminum foil, and then drying, cold pressing and cutting to obtain the positive electrode plate.

The isolation film: adopting a polypropylene film.

The preparation of the electrolyte: mixing ethylene carbonate (EC), methyl ethyl carbonate (EMC) and diethyl carbonate (DEC) according to a volume ratio of 1: 1: 1, and then uniformly dissolving LiPF₆ in the solution above, to obtain the electrolyte. In the electrolyte, concentration of LiPF₆ is 1 mol/L.

The preparation of the secondary battery: sequentially stacking the positive electrode plate, the isolation film and the negative electrode plate and winding, to obtain an electrode assembly; and putting the electrode assembly into an outer package, adding the prepared electrolyte, and after processes of packaging, standing, forming, aging and the like, obtaining the secondary battery.

### Embodiments 2-18, and Comparative Examples 1-2:

Embodiments 2-18, and Comparative Examples 1-2 differ from Embodiment 1 in that the first negative electrode active material layer of the negative electrode plate is different in composition. For the composition of the first negative electrode active material layer of the negative electrode plate of Embodiments 1-18 and Comparative Examples 1-2, reference can be made to Table 1.

**Table 1 Composition of the first negative electrode active material layer of the negative electrode plate of Embodiments 1-13 and Comparative Example 1**

| Serial number | First conductive agent | | First binder | | Porous material | | Mass percentage of dispersant (%) |
|---|---|---|---|---|---|---|---|
| | Type | Mass percentage (%) | Type | Mass percentage (%) | Type | Mass percentage (%) | |
| Embodiment 1 | graphite (Dv50 3.5µm)+ CNT(tube diameter 2nm, axial length 15µm) | 32+1 | SBR | 16 | porous carbon (pore diameter 100nm, porosity 50%, Dv50 7.2µm) | 10 | 1 |
| Embodiment 2 | graphite (Dv50 3.5µm)+ CNT(tube diameter 2nm, axial length 15µm) | 32+1 | SBR | 18 | porous carbon (pore diameter 100nm, porosity 50%, Dv50 7.2µm) | 8 | 1 |
| Embodiment 3 | graphite (Dv50 3.5µm)+ CNT(tube diameter 2nm, axial length 15µm) | 32+1 | SBR | 22 | porous carbon (pore diameter 100nm, porosity 50%, Dv50 7.2µm) | 4 | 1 |
| Embodiment 4 | graphite (Dv50 3.5µm)+ CNT(tube diameter 2nm, axial length 15µm) | 32+1 | SBR | 24 | porous carbon (pore diameter 100nm, porosity 50%, Dv50 7.2µm) | 2 | 1 |
| Embodiment 5 | graphite (Dv50 3.5 µm) | 33 | SBR | 18 | porous carbon (pore diameter 100nm, porosity 50%, Dv50 7.2µm) | 8 | 1 |
| Embodiment 6 | graphite (Dv50 3.5µm)+ CNT(tube diameter 2nm, axial length 20µm) | 32+1 | SBR | 18 | porous carbon (pore diameter 100nm, porosity 50%, Dv50 7.2µm) | 8 | 1 |
| Embodiment 7 | graphite (Dv50 3.5µm)+ CNT(tube diameter 2nm, axial length 20µm+SP | 30.5+1+1.5 | SBR | 18 | porous carbon (pore diameter 100nm, porosity 50%, Dv50 7.2µm) | 8 | 1 |
| Embodiment 8 | graphite (Dv50 3.5µm)+ CNT(tube diameter 2nm, axial length 15µm) | 32+1 | SBR | 18 | porous carbon (pore diameter 10nm, porosity 50%, Dv50 7.2µm) | 8 | 1 |
| Embodiment 9 | graphite (Dv50 3.5µm)+ CNT(tube diameter 2nm, axial length 15µm) | 32+1 | SBR | 18 | porous carbon (pore diameter 1000nm, porosity 50%, Dv50 7.2µm) | 8 | 1 |
| Embodiment 10 | graphite (Dv50 3.5µm)+ CNT(tube diameter 2nm, axial length 15µm) | 32+1 | SBR | 18 | porous carbon (pore diameter 30nm, porosity 50%, Dv50 7.2µm) | 8 | 1 |
| Embodiment 11 | graphite (Dv50 3.5µm)+ CNT(tube diameter 2nm, axial length 15µm) | 32+1 | SBR | 18 | porous carbon (pore diameter 60nm, porosity 50%, Dv50 7.2µm) | 8 | 1 |
| Embodiment 12 | graphite (Dv50 3.5µm)+ CNT(tube diameter 2nm, axial length 15µm) | 32+1 | SBR | 18 | porous carbon (pore diameter 300nm, porosity 50%, Dv50 7.2µm) | 8 | 1 |
| Embodiment 13 | graphite (Dv50 3.5µm)+ CNT(tube diameter 2nm, axial length 15µm) | 32+1 | SBR | 18 | porous carbon (pore diameter 500nm, porosity 50%, Dv50 7.2µm) | 8 | 1 |
| Embodiment 14 | graphite (Dv50 3.5µm)+ CNT(tube diameter 2nm, axial length 15µm) | 32+1 | SBR | 18 | porous carbon (pore diameter 100nm, porosity 50%, Dv50 8.4µm) | 8 | 1 |
| Embodiment 15 | graphite (Dv50 3.5µm)+ CNT(tube diameter 2nm, axial length 15µm) | 32+1 | SBR | 18 | porous carbon (pore diameter 100nm, porosity 50%, Dv50 10.1µm) | 8 | 1 |
| Embodiment 16 | graphite (Dv50 3.5µm)+ CNT(tube diameter 2nm, axial length 15µm) | 32+1 | SBR | 18 | Porous metal nickel (pore diameter 100nm, porosity 50%, Dv50 7.2µm) | 8 | 1 |
| Embodiment 17 | graphite (Dv50 3.5µm)+ CNT(tube diameter 2nm, axial length 15µm) | 32+1 | SBR | 18 | Porous aluminum oxide (pore diameter 100nm, porosity 50%, Dv50 7.2µm) | 8 | 1 |
| Embodiment 18 | SP+CNT(tube diameter 2nm, axial length 15µm) | 32+1 | SBR | 18 | porous carbon (pore diameter 100nm, porosity 50%, Dv50 7.2µm) | 8 | 1 |
| Comparative Example 1 | SP+CNT(tube diameter 2nm, axial length 15µm) | 40+1 | SBR | 18 | / | / | 1 |
| Comparative Example2 | graphite (Dv50 3.5µm)+ CNT(tube diameter 2nm, axial length 15µm) | 40+1 | SBR | 18 | / | / | 1 |

| | | | | | | | |
|---|---|---|---|---|---|---|---|
| Note: the mass percentage in Table 1 is the mass percentage of a substance in the first negative electrode active material layer. | | | | | | | |

### Test section:

### Test of cycle performance of the secondary battery at 45°C

Under a constant-temperature environment of 45°C, constant-current charging is carried out on the second battery prepared in the respective Embodiments and Comparative Examples at a constant current rate of 1C until a voltage is 4.25V, then constant-voltage charging is carried out at the voltage of 4.25V until a current is smaller than or equal to 0.05mA, leaving it to stand for 5 minutes, after that, constant-current discharging is carried out at 1C multiplying power until the voltage is 2.5V, leaving it to stand for 5 minutes, and this is a cycle charging-discharging process, a discharging capacity for this time is recorded as a discharging capacity of the first cycle of the secondary battery. The secondary battery is subjected to the cycle charging-discharging test for 300 times according to the method above, and the discharging capacity of the 300th cycle is recorded.A capacity retention rate of the secondary battery after cycling for 300 times at 45°C CR45°C (%) = the discharging capacity of the 300th cycle/the discharging capacity of the first cycle * 100%.

### Test of electrode plate cycle expansion performance of the secondary battery at 45°C

The thickness of the electrode plate at the time when the cold pressing process on the negative electrode plate of the secondary battery is finished is marked as h0. The secondary battery is cycled for 300cls according to the above test method of the cycle performance of the second battery at 45°C; in each cycle, constant-current charging is carried out at a constant current rate of 1C until the voltage is 4.25V, then constant-voltage charging is carried out at the voltage of 4.25V until the current is smaller than or equal to 0.05mA, then it is left to stand for 5 minutes. The cycled battery cell is disassembled in a drying room, the thickness of the negative electrode plate after cycling for 300cls is marked as h300, and a 300cls cycle expansion rate of the electrode plate of the secondary battery at 45°C Δh300 (%) = (h300-h0)/h0*100%.

### Test of direct current resistance DCR

Under a constant-temperature environment of 25°C, constant-current charging is carried out on the second battery prepared in the respective Embodiments and Comparative Examples at a constant current rate of 0.33C until a voltage is 4.25V, then constant-voltage charging is carried out at the voltage of 4.25V until a current is smaller than or equal to 0.05mA, then it is left to stand for 5 minutes, after that, constant-current discharging is carried out at a constant current rate of 1C for 30 minutes, the battery cell is adjusted to 50%SOC, that is, the battery cell keeps 50% capacity, leaving it to stand for 60 minutes. Then discharging is carried out for 30 seconds at 3C. A voltage before discharging is recorded as V1, a voltage after discharging as V2, and a discharging current as I1, and then DCR = (V1-V2)/I1.

Electrochemical test results of the secondary batteries in Embodiments 1-18 and Comparative Examples 1-2 are recorded in Table 2.

**Table 2 Electrochemical performance of the secondary batteries in Embodiments 1-18 and Comparative Examples 1-2**

| Serial number | Cycle capacity retention rate for 300cls at 45°C: CR45°C(%) | Cycle expansion rate for 300cls at 45°C: Δh300(%) | DCR(mQ) |
|---|---|---|---|
| Embodiment 1 | 96.4 | 42.5 | 563 |
| Embodiment 2 | 95.6 | 44.6 | 597 |
| Embodiment 3 | 95.2 | 45.2 | 613 |
| Embodiment 4 | 94.9 | 45.9 | 635 |
| Embodiment 5 | 95.6 | 48.2 | 617 |
| Embodiment 6 | 95.9 | 44.4 | 582 |
| Embodiment 7 | 96.5 | 42.7 | 566 |
| Embodiment 8 | 93.9 | 46.8 | 595 |
| Embodiment 9 | 93.3 | 43.9 | 564 |
| Embodiment 10 | 95.4 | 45.4 | 591 |
| Embodiment 11 | 95.9 | 44.9 | 587 |
| Embodiment 12 | 96.3 | 44.2 | 572 |
| Embodiment 13 | 94.3 | 44.0 | 568 |
| Embodiment 14 | 95.6 | 45.2 | 552 |
| Embodiment 15 | 93.5 | 44.5 | 537 |
| Embodiment 16 | 96.9 | 41.3 | 356 |
| Embodiment 17 | 96.5 | 46.3 | 615 |
| Embodiment 18 | 92.9 | 49.2 | 672 |
| Comparative Example 1 | 85.3 | 56.5 | 797 |
| Comparative Example2 | 89.1 | 58.4 | 831 |

It can be seen from related data in Table 2 that after the secondary batteries in Embodiments 1-18 are cycled for 300 cycles at 45°C, the capacity retention rate is 92.9%-96.9%, the cycle expansion rate Δh300 is 41.3%-49.2%, and the direct current resistance DCR is 356mQ-672mQ, so that the secondary battery has a relatively good cycle stability and relatively small direct current resistance, and the cycle performance and dynamic performance are relatively good. The secondary batteries in Comparative Examples 1-2 do not contain the porous material, and after cycling for 300 cycles at 45°C, the capacity retention rate is 85.3% and 89.1%, the cycle expansion rate Δh300 is 56.5% and 58.4%, and the direct current resistance DCR is 797mQ and 831mQ, so that both the cycle performance and the dynamic performance are worse than Embodiments 1-18. Thus it can be seen that the secondary battery can have relatively good cycle performance and relatively low resistance by adding the porous material into the first active material layer.

The various technical features of the embodiments described above can be combined arbitrarily, and in order to make the description concise, not all possible combinations of the various technical features in the above embodiments are described, however, as long as there is no contradiction in the combination of these technical features, it should be considered to be within the scope of the present specification.

The above embodiments only express several embodiments of the present disclosure, and the description thereof is relatively specific and detailed, but it cannot be understood as a limitation on the patent scope of the present disclosure. It should be noted that for a person of ordinary skill in the art, a plurality of variations and improvements can be made without departing from the concept of the present disclosure, and these are all within the protection scope of the present disclosure. Therefore, the protection scope of the present disclosure shall be subject to the appended claims.

## Claims

1. A secondary battery, comprising a negative electrode plate, wherein the negative electrode plate comprises:
a negative electrode current collector;
a first negative electrode active material layer disposed on at least one surface of the negative electrode current collector, the first negative electrode active material layer comprising a silicon-based material and a porous material; and
a second negative electrode active material layer disposed on a surface of the first negative electrode active material layer away from the negative electrode current collector.

2. The secondary battery according to claim 1, wherein the porous material comprises at least one of porous carbon, porous metal, and porous ceramic;
optionally, the porous carbon comprises at least one of porous graphite, porous resin carbon, porous biomass carbon, activated carbon, porous carbon fibers, and expanded graphite;
optionally, the porous metal comprises at least one of porous nickel, porous copper, porous titanium, porous gold, porous stainless steel, and porous metal alloy material;
optionally, the porous ceramic comprises at least one of porous Si₃N₄, porous Al₂O₃, and porous SiC.

3. The secondary battery according to claim 1 or 2, wherein a pore diameter of the porous material ranges from 10 nm to 1000 nm; and optionally, the pore diameter of the porous material ranges from 30 nm to 300 nm.

4. The secondary battery according to any one of claims 1 to 3, wherein a porosity P of the porous material is greater than or equal to 30%; and optionally, the porosity P of the porous material satisfies 40%≤P≤80%.

5. The secondary battery according to any one of claims 1 to 4, wherein, in the first negative electrode active material layer, a mass percentage of the porous material is less than or equal to 10%, and optionally, ranging from 2% to 8%.

6. The secondary battery according to any one of claims 1 to 5, wherein, in the first negative electrode active material layer, a mass percentage of the silicon-based material is greater than or equal to 30%, and optionally, ranging from 40% to 60%.

7. The secondary battery according to any one of claims 1 to 6, wherein a thickness of the first negative electrode active material layer is denoted as D1, volume particle size distribution Dv50 of the porous material is denoted as D0, and then the negative electrode plate satisfies 0.5≤D0/D1≤0.8; and optionally, the negative electrode plate satisfies 0.6≤D0/D1≤0.7.

8. The secondary battery according to any one of claims 1 to 7, wherein a thickness of the first negative electrode active material layer is denoted as D1, a thickness of the second negative electrode active material layer is denoted as D2, and then the negative electrode plate satisfies: 3≤D2/D1≤9; and optionally, the negative electrode plate satisfies: 4≤D2/D1≤7.

9. The secondary battery according to any one of claims 1 to 8, wherein a thickness of the first negative electrode active material layer is less than or equal to 15µm; and optionally the thickness of the first negative electrode active material layer ranges from 5µm to 13µm.

10. The secondary battery according to any one of claims 1 to 9, wherein the first negative electrode active material layer comprises a first conductive agent;
optionally, the first conductive agent comprises at least one of graphite, superconducting carbon, acetylene black, Ketjenblack, conductive carbon black, graphene, carbon dots, carbon nanotubes, carbon nanofibers, and graphite;
optionally, in the first negative electrode active material layer, a mass percentage of the first conductive agent is greater than or equal to 25%, and more optionally, ranging from 25% to 40%.

11. The secondary battery according to any one of claims 1 to 10, wherein the first conductive agent comprises graphite; the graphite satisfies at least one of conditions (I) to (V):
(I) a volume particle size distribution Dv50 of the graphite ranges from 3 µm to 8 µm, and optionally, from 4 µm to 7 µm;
(II) a volume particle size distribution Dv99 of the graphite ranges from 9 µm to 15 µm, and optionally, from 10 µm to 13 µm;
(III) in the first negative electrode active material layer, a mass percentage of the graphite is less than 40%, and optionally, ranging from 25% to 35%;
(IV) particle morphology of the graphite is primary particles; and
(V) an initial coulomb efficiency of the graphite ranges from 85% to 93%, and optionally, from 87% to 92%.

12. The secondary battery according to any one of claims 10 to 11, wherein the first conductive agent comprises carbon nanotubes;
optionally, in the first negative electrode active material layer, a mass percentage of the carbon nanotubes is less than or equal to 5.0%;
optionally, a tube diameter of the carbon nanotubes ranges from 0.4 nm to 20 nm;
optionally, the carbon nanotubes comprise at least one of single-walled carbon nanotubes and multi-walled carbon nanotubes, and more optionally, comprising the single-walled carbon nanotubes.

13. The secondary battery according to any one of claims 10 to 12, wherein:
the first conductive agent comprises carbon nanotubes,
the thickness of the first negative electrode active material layer is denoted as D1, an axial length of the carbon nanotubes is denoted as L1, and the negative electrode plate satisfies L1/D1>1; and optionally, the negative electrode plate satisfies 1.5≤L1/D1≤5.0.

14. The secondary battery according to any one of claims 1 to 13, wherein the first negative electrode active material layer comprises a first binder;
optionally, a glass transition temperature the first binder is less than or equal to 25°C;
optionally, the first binder comprises at least one of styrene-butadiene rubber, modified styrene-butadiene rubber, methyl acrylate, ethyl acrylate, butyl acrylate, lauryl acrylate, and butadiene;
optionally, in the first negative electrode active material layer, a mass percentage of the first binder is greater than or equal to 15%, and more optionally, ranging from 15% to 25%.

15. The secondary battery according to any one of claims 1 to 14, wherein the second negative electrode active material comprises graphite, and the graphite satisfies at least one of conditions (1) to (4):
(1) a mass percentage of the graphite is greater than or equal to 80%, and optionally, ranging from 90% to 96.5%;
(2) Dv50 of the graphite ranges from 10 µm to 20 µm, and optionally, 12 µm to 18 µm;
(3) Dv99 of the graphite is less than or equal to 45 µm, and optionally, ranging from 30 µm to 42 µm; and
(4) morphology of the graphite is secondary particles.

16. The secondary battery according to any one of claims 1 to 15, wherein the second negative electrode active material layer comprises graphite and the silicon-based material; and optionally, in the second negative electrode active material layer, a mass percentage of the silicon-based material is less than or equal to 5%.

17. The secondary battery according to any one of claims 1 to 16, wherein the second negative electrode active material layer satisfies at least one of conditions (i) to (iii):
(i) the second negative electrode active material layer comprises a second binder, and optionally, in the second negative electrode active material layer, a mass percentage of the second binder is less than or equal to 4%;
(ii) the second negative electrode active material layer comprises a second conductive agent, and optionally, in the second negative electrode active material layer, a mass percentage of the second conductive agent is less than or equal to 1.5%; and
(iii) the second negative electrode active material layer comprises a second conductive agent, and the second conductive agent comprises carbon nanotubes, and optionally, in the second negative electrode active material layer, a mass percentage of the carbon nanotubes is less than or equal to 0.15%.

18. A preparation method for the secondary battery according to any one of claims 1 to 17, comprising following steps for preparing the negative electrode plate:
preparing first negative electrode slurry, the first negative electrode slurry comprising a silicon-based material and a porous material;
preparing second negative electrode slurry;
coating the first negative electrode slurry on at least one surface of the negative electrode current collector to prepare the first negative electrode active material layer; and
coating the second negative electrode slurry on a surface of the first negative electrode active material layer away from the negative electrode current collector to prepare the second negative electrode active material layer.

19. The preparation method for the secondary battery according to claim 18, wherein solid content of the first negative electrode slurry is less than or equal to 30%, and optionally, ranging from 15% to 25%.

20. An electric device, comprising the secondary battery according to any one of claims 1 to 17 or a secondary battery prepared by the preparation method according to any one of claims 18 to 19.
